# FASCICULE DE BREVET EUROPEEN

(11) **EP 3 300 542 B1**
(45) Date de publication et mention de la délivrance du brevet: **21.08.2019**
(21) Numéro de dépôt: 16815624.8
(22) Date de dépôt: 01.12.2016
(51) Int. Cl.: H02H 3/33, H02H 3/34, H02H 3/347

(54) **DISPOSITIF DE PROTECTION DIFFÉRENTIELLE DU TYPE B OU B+ COMPORTANT DEUX MODULES EN PARALLÈLE ET EN CONCURRENCE**
B- ODER B+-DIFFERENTIALSCHUTZVORRICHTUNG MIT ZWEI PARALLELEN GLEICHZEITIGEN MODULEN
B OR B+ DIFFERENTIAL PROTECTION DEVICE COMPRISING TWO PARALLEL CONCURRENT MODULES

(30) Priorité: 03.12.2015 FR 1561773
(43) Date de publication de la demande: 04.04.2018
(73) Titulaire: HAGER-ELECTRO SAS, 67210 Obernai (FR)
(72) Inventeur: CHETOUANI, Hichem, 67380 Lingolsheim (FR)
(74) Mandataire: Nuss, Laurent
(86) Numéro de dépôt international: PCT/FR2016/053161
(87) Numéro de publication internationale: WO 2017/093670

(56) Documents cités:
- EP-A1- 2 445 074
- WO-A1-2014/006308
- WO-A1-2014/104982
- WO-A1-2015/139655
- DE-A1- 19 735 412
- DE-A1- 19 940 344

## Description

La présente invention concerne les équipements et systèmes de sécurité des biens et des personnes dans le domaine électrique, plus particulièrement les dispositifs de protection de personnes à courant différentiel résiduel (ou DDR), et a pour objet un dispositif de protection différentielle du type B ou B+ comprenant deux modules de détection indépendants et fonctionnant en concurrence mutuelle.

Les dispositifs de protection différentielle sont couramment intégrés dans des installations électriques domestiques ou tertiaires, en amont ou à l'entrée des diverses arborescences des circuits d'alimentation en place, voir au plus près des récepteurs auxquels ils sont respectivement affectés.

Typiquement, ces installations électriques sont alimentées par un réseau électrique alternatif, et des dispositifs de protection du type précité ont pour but d'assurer principalement la sécurité des personnes en détectant le plus rapidement possible toute fuite éventuelle vers la terre dans un des circuits ou récepteurs à protéger. De telles fuites sont par exemple causées par des contacts directs de sujets avec un conducteur non isolé ou des contacts indirects dus à des défauts de masse. Ces incidents électriques sont susceptibles de générer des accidents, parfois mortels, des détériorations de matériel(s), des départs d'incendie, des dysfonctionnements localisés ou généralisés ou analogues.

La protection différentielle, dans le contexte précité, s'effectue dans la plupart des cas d'une manière assez standardisée.

Pour la détection des courants de défaut alternatifs, les conducteurs du circuit à protéger, ou les conducteurs du réseau ou de la ligne d'alimentation de ce circuit, passent dans un tore de matériau ferromagnétique d'un transformateur dont les conducteurs précités forment le primaire et qui comporte un ou plusieurs enroulement(s) ou bobinage(s) secondaire(s). Le tore joue le rôle d'un concentrateur de flux magnétique. Ainsi en cas de fuite, se traduisant par un déséquilibre des courants d'entrée et de sortie dans les conducteurs des lignes à protéger, le flux créé dans le tore par ce déséquilibre au niveau du primaire, induit dans le bobinage secondaire une tension, constituant un signal de défaut.

Pour la détection des courants de défaut continus ou DC, il est par exemple connu d'exciter à saturation un tore magnétique doux, traversé par les conducteurs de la ligne ou du réseau, par un courant alternatif. Lors de l'apparition d'un courant de défaut DC dans les conducteurs, la symétrie de la saturation (sens positif/sens négatif) est rompue, la dissymétrie temporaire résultante étant proportionnelle au courant de défaut. Cette méthode dite "Fluxgate" peut ensuite prévoir d'exploiter directement le signal de défaut, ou son spectre fréquentiel.

Un autre principe de détection, développé et mis en oeuvre par la demanderesse, consiste à utiliser un transformateur de tension (par exemple un tore) doté d'un primaire (bobinage d'excitation) appliquant une tension fixe et un secondaire (bobinage de mesure) ayant un rapport de transformation variable, la valeur de ce dernier dépendant de l'intensité du courant de défaut qui traverse le tore et qui résulte de la somme algébrique des courants entrant et sortant.

Dans les deux types de détection de courants de défaut précités (alternatifs et continus), le signal de défaut est utilisé pour commander directement, ou à travers une électronique dédiée (étages de traitement des signaux), un actionneur ou analogue (par exemple de type relais). Ce dernier commande à son tour un mécanisme de déclenchement, de coupure ou d'ouverture associé, ou ceux d'autres appareils de protection de l'installation.

En lieu et place du tore précité, il peut aussi être prévu, en accord avec d'autres variantes connues de l'état de la technique, de mettre en oeuvre d'autres types de capteurs ou de détecteurs aptes et destinés à générer un signal de défaut lorsqu'un défaut différentiel apparaît au niveau du réseau ou de l'installation surveillé(e).

Ces appareils ou dispositifs de protection différentielle peuvent présenter des caractéristiques variables. Ainsi, ils sont différentiables et caractérisés par leur sensibilité propre, qui dépend notamment du type d'installation électrique dans laquelle ils sont utilisés et qu'ils sont destinés à protéger. Par ailleurs, certains de ces appareils ne sont capables de détecter des fuites que pour des courants alternatifs (type AC) ou que pour des courants continus, alors que d'autres, plus complets, offrent des solutions également applicables au courant continu pulsé (types A et F) et lissé (type B).

Par ailleurs, pour les dispositifs ayant la capacité de détecter des courants de défaut alternatifs, la fréquence limite supérieure de détection constitue un autre critère de distinction entre les différents types : fréquences jusqu'à quelques dizaines de Hz : AC ; fréquences jusqu'à 1kHz: type F ; fréquences jusqu'à 2kHz : type B ; fréquences jusqu'à 20kHz : type B+.

Le type B+ est, par rapport aux autres types, spécifiquement sensible aux fréquences de courant de défaut ou de fuite propices aux départs de feu, en plus des fonctionnalités associées au type B.

Les dispositifs sophistiqués du type B et B+ reposent actuellement sur des constructions de circuits complexes et qui dépendent généralement de l'alimentation du réseau pour leur fonctionnement, avec prévision d'au moins un sous-ensemble fonctionnel non dépendant de cette alimentation pour répondre à des mesures de sécurité primaire et aux réglementations actuellement en vigueur (voir par exemple : DIN VDE 0664-400-version 2012).

Une solution de construction d'un dispositif de type B est par exemple connue de la demande de brevet français n° 2 993 058 au nom de la demanderesse.

Pour réduire la complexité constructive de ces dispositifs sophistiqués et polyvalents, tout en répondant aux exigences réglementaires, il a été proposé de les réaliser sous forme d'arrangement fonctionnel modulaire.

Ainsi, une première solution connue de ce type consiste à prévoir un dispositif comportant un premier module fonctionnel réalisant une fonction de mesure/détection de type B et un second module fonctionnel réalisant une fonction de mesure/détection de type A/AC. Le premier module est actif en présence d'une alimentation réseau et le second module ne devient actif qu'en l'absence d'alimentation réseau, le basculement entre les deux voies étant réalisé à l'aide d'un relais monostable situé à l'entrée des deux voies et dont la position par défaut (en l'absence d'alimentation réseau) correspond à une transmission du signal vers le second module.

Une seconde solution connue consiste à associer à un module réalisant une mesure/détection de type A/AC, en amont de ce dernier, un étage électronique actif (alimenté par le réseau) qui réalise une correction de la bande passante et permet ainsi d'aboutir à une mesure/détection de type B en présence d'une alimentation réseau. En l'absence d'une telle alimentation, l'étage électronique actif est court-circuité (par exemple à l'aide d'un relais sélecteur alimenté par le réseau et dont la position par défaut correspond à la dérivation du signal par rapport au circuit électronique), et le dispositif présente alors un fonctionnement du type A/AC.

Ainsi, ces deux solutions connues visant à simplifier les dispositifs de protection différentielle de type B ne donnent pas satisfaction compte tenu des limitations de fonctionnement indiquées ci-dessus. Par ailleurs, aucune de ces deux solutions connues ne concerne un dispositif du type B+.

On identifie ici deux documents de l'Art antérieur.

Le document DE 199 40 344 A1 divulgue divulgue un appareil de protection (1) de courant de défaut comprenant un premier système de détection (E1) et un deuxième système de détection (E2). Ces premier et deuxième systèmes de détection (E1, E2) sont alimentés respectivement par des enroulements secondaires (N1 N2) du ou des transformateurs de courant (2, 2'). En outre, ces premier et deuxième systèmes de détection (E1, E2) sont reliés à leur sortie à un relais de déclenchement (3) couplé à un mécanisme de coupure (4) qui pilote l'ouverture d'un système de contacts (5). Le premier système de détection (E1) est prévu pour des courants de défaut dont la fréquence est égale à 50 Hertz, mais est opérationnel sur une plage située entre 0 Hertz et une fréquence de passage (fü) qui peut être comprise entre 1 kilohertz et 5 kilohertz . Le deuxième système de détection (E2) permet de fonctionner pour des courants de défaut dont la fréquence est comprise entre la fréquence de passage (fü) et 20 kilohertz.

Le document WO 2015/139655 A1 décrit un appareil de protection de courant résiduel qui comprend un premier noyau magnétique (107) et un second noyau magnétique (108). Le premier noyau magnétique (107) est couplé à un premier circuit de détection de courant de défaut (102), tandis que le deuxième noyau magnétique (107) est couplé à un deuxième circuit de détection de courant de défaut (102). Le premier circuit de détection de courant de défaut (102) est alimenté par la tension du réseau. Le deuxième circuit de détection de courant de défaut (103) est indépendant de la tension du réseau. Le premier circuit de détection de courant de défaut (102) et le deuxième circuit de détection de courant de défaut (103) sont reliés à un circuit de commande (104). Le premier circuit de détection de courant de défaut (102) permet la détection pour des fréquences inférieures à 1 kilohertz.

La présente invention a pour but de surmonter au moins les principales limitations précitées.

A cet effet, elle a pour objet un dispositif de protection différentielle de type B ou B+ permettant la détection de courant de fuite ou de défaut dans une installation électrique alimentée par au moins deux conducteurs de phase d'un réseau ou par au moins un conducteur de phase d'un réseau et par un conducteur de neutre dudit réseau,

ledit dispositif comprenant deux modules de détection et de commande distincts comportant chacun au moins un étage de traitement de signaux apte et destiné, d'une part, à exploiter un signal de défaut généré par l'apparition d'un défaut différentiel au niveau dudit réseau et, d'autre part, à commander un actionneur électromagnétique, relais ou moyen de coupure ou d'ouverture analogue du dispositif lorsque ledit signal de défaut dépasse une valeur de seuil prédéfinie dépendant de la fréquence, chacun desdits modules de détection et de commande étant fonctionnellement actif ou opérationnel sur une plage de fréquences déterminée qui lui est propre, les deux modules étant indépendants entre eux et arrangés de manière à constituer deux voies de détection, parallèles et mutuellement indépendantes, commandant le même actionneur, relais ou moyen de coupure,
en ce que le second des deux modules étant autonome en termes d'alimentation, et en particulier non dépendant de la tension du réseau ou du secteur,
et chaque module étant relié à un moyen propre et spécifique de délivrance d'un signal de défaut,
dispositif caractérisé :
en ce qu'un premier des deux modules est un module de détection et de commande qui est fonctionnellement actif ou opérationnel pour des fréquences du signal de défaut de OHz à quelques dizaines de Hz, ce premier module étant alimenté par le réseau,
en ce que le second des deux modules est un module de détection et de commande qui est fonctionnellement actif ou opérationnel pour des fréquences du signal de défaut de quelques dizaines de Hz à au moins 1 kHz, en ce que les domaines fréquentiels de fonctionnement opérationnel des deux modules précités étant partiellement chevauchants, et
en ce que les courbes de variation de la sensibilité en courant en fonction de la fréquence, des deux modules respectivement, présentent un point commun d'intersection, la valeur de la fréquence de ce point étant au plus égale à la valeur de la fréquence du réseau surveillé ou du secteur.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
la figure 1 est une représentation schématique, fonctionnelle et synoptique, d'un dispositif de protection différentielle selon un mode de réalisation de l'invention ;
la figure 2 représente les courbes d'évolution des seuils de déclenchement (en mA) en fonction de la fréquence, de chacun des deux modules de détection et de commande faisant partie du dispositif selon l'invention, en accord avec le mode de réalisation représenté figure 1, et,
la figure 3 représente la courbe d'évolution du seuil de déclenchement (en mA) en fonction de la fréquence du dispositif global selon l'invention, représenté figure 1 et combinant les deux modules.

Cette dernière figure montre schématiquement la constitution d'un dispositif de protection différentielle 1 de type B ou B+ permettant la détection de courant de fuite ou de défaut dans une installation électrique alimentée par au moins deux conducteurs de phase 2 d'un réseau ou par au moins un conducteur de phase d'un réseau et par un conducteur de neutre 2' dudit réseau.

Ce dispositif 1 comprend deux modules de détection et de commande distincts 3 et 3' comportant chacun au moins un étage de traitement de signaux 4, 4' apte et destiné, d'une part, à exploiter un signal de défaut généré par l'apparition d'un défaut différentiel au niveau dudit réseau et, d'autre part, à commander un actionneur électromagnétique, relais ou moyen de coupure ou d'ouverture analogue 5 du dispositif 1 lorsque ledit signal de défaut dépasse une valeur de seuil prédéfinie dépendant de la fréquence, chacun desdits modules de détection et de commande 3, 3' étant fonctionnellement actif ou opérationnel sur une plage de fréquences déterminée qui lui est propre.

Conformément à l'invention, il est prévu :
que les deux modules 3 et 3' sont indépendants entre eux et arrangés de manière à constituer deux voies de détection, parallèles et mutuellement indépendantes, commandant le même actionneur, relais ou moyen analogue 5,
que chaque module 3, 3' est relié à un moyen propre et spécifique 6, 6) de délivrance d'un signal de défaut,
qu'un premier 3 des deux modules 3, 3' est un module de détection et de commande qui est fonctionnellement actif ou opérationnel pour des fréquences du signal de défaut de 0Hz à quelques dizaines de Hz, ce premier module 3 étant alimenté par le réseau, et
que le second 3' des deux modules 3, 3' est un module de détection et de commande qui est fonctionnellement actif ou opérationnel pour des fréquences du signal de défaut de quelques dizaines de Hz à au moins 1 kHz, ce second module 3' étant autonome en termes d'alimentation, et en particulier non dépendant de la tension du réseau ou du secteur,
les domaines fréquentiels de fonctionnement opérationnel des deux modules 3 et 3' précités étant partiellement chevauchants.

En accord avec une caractéristique importante de l'invention, les deux modules 3 et 3' présentent chacun un fonctionnement prépondérant par rapport à l'autre module 3', 3 sur des parties mutuellement complémentaires du domaine fréquentiel total des courants de défaut couvert par ledit dispositif 1.

Ainsi, grâce à une association modulaire particulière de deux briques fonctionnelles 3 et 3' complémentaires en termes de couverture fréquentielle, qui sont toutes deux en permanence actives en termes de détection et en concurrence permanente en vue de la commande du moyen de coupure ou d'ouverture 5, l'invention propose un dispositif 1 sophistiqué et optimal en termes de protection (niveau B ou B+) tout en mettant en oeuvre des modules 3 et 3' dont le niveau de complexité, et donc le coût de revient, est notablement moins élevé.

De plus, l'arrangement en parallèle des deux modules 3 et 3' autorise un accès direct de chacun d'eux aux conducteurs 2, 2' à surveiller et donc une détection propre, ainsi qu'un traitement et une exploitation des résultats de la détection indépendants.

Enfin, en cas de coupure de l'alimentation, le second module 3', qui n'est pas tributaire de l'alimentation secteur ou réseau, continue à assurer pleinement sa fonction de protection.

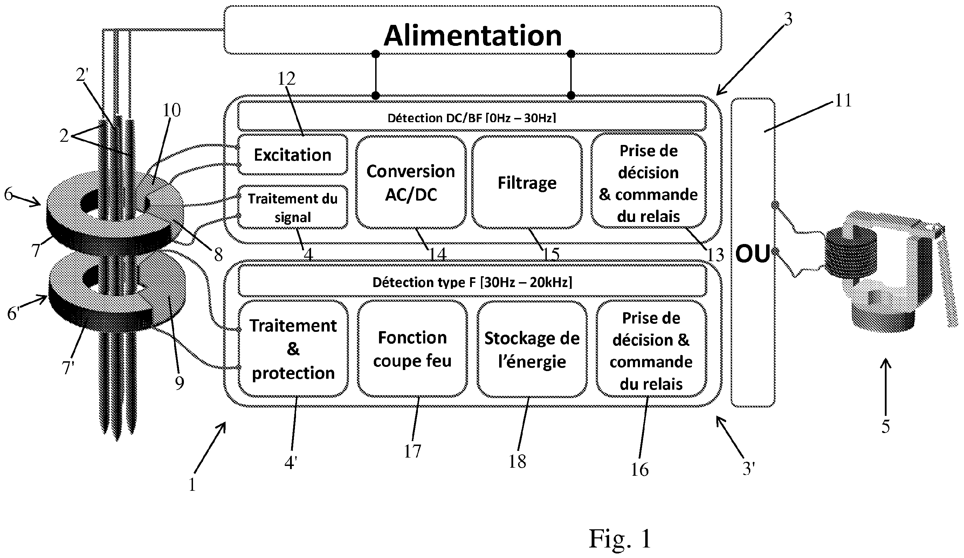

Selon une caractéristique de l'invention, ressortant de la figure 1, le premier module 3 de détection et de commande, dépendant de la tension du réseau, est un module de protection différentielle sensible et réagissant aux courants de défaut continus lissés, à basse fréquence et/ou doté d'un décalage DC important, par exemple un courant de défaut issu de trois phases tel que décrit au paragraphe 9.2.16 de la norme IEC 62423.

Selon une autre caractéristique de l'invention, ressortant également de la figure 1, le second module 3' de détection et de commande est un module de protection différentielle du type F, intégrant éventuellement une fonction du type coupe-feu (donc de type F+), le fonctionnement dudit second module 3', inclusivement la réalisation de la fonction précitée, étant indépendants de la tension du réseau ou du secteur.

Comme déjà indiqué précédemment, plusieurs types de capteurs peuvent être mis en oeuvre en relation avec chacun des deux modules 3 et 3' pour délivrer à ces derniers des signaux de défaut lors de l'apparition d'un défaut différentiel au niveau de l'installation surveillée.

Toutefois, en accord avec une variante de réalisation pratique préférée, chacun des moyens propres 6 et 6' de délivrance d'un signal de défaut consiste en un tore 7, 7' en matériau ferromagnétique comportant, d'une part, un enroulement primaire formé par l'un des conducteurs 2, 2' du réseau surveillé ou par un enroulement d'excitation 10, selon le moyen 6, 6' considéré et, d'autre part, au moins un enroulement secondaire 8, 9 délivrant un signal de défaut au module de détection et de commande 3 ou 3' respectivement associé, ce sous la forme d'un signal induit au niveau du secondaire lors de l'apparition d'un défaut différentiel au niveau du primaire correspondant.

Comme le montre également la figure 1, les deux modules de détection et de commande 3 et 3' sont reliés, à leur sortie, par l'intermédiaire d'un circuit OU 11 à l'unique actionneur, relais ou moyen analogue 5 du dispositif 1.

Bien entendu, les deux chaînes parallèles et indépendantes de mesure, de détection, d'exploitation, de traitement et de commande, formées par les moyens 6, 6' et les modules 3, 3', comprennent des composants constitutifs optimisés en termes de temps de réaction, connus de l'homme du métier.

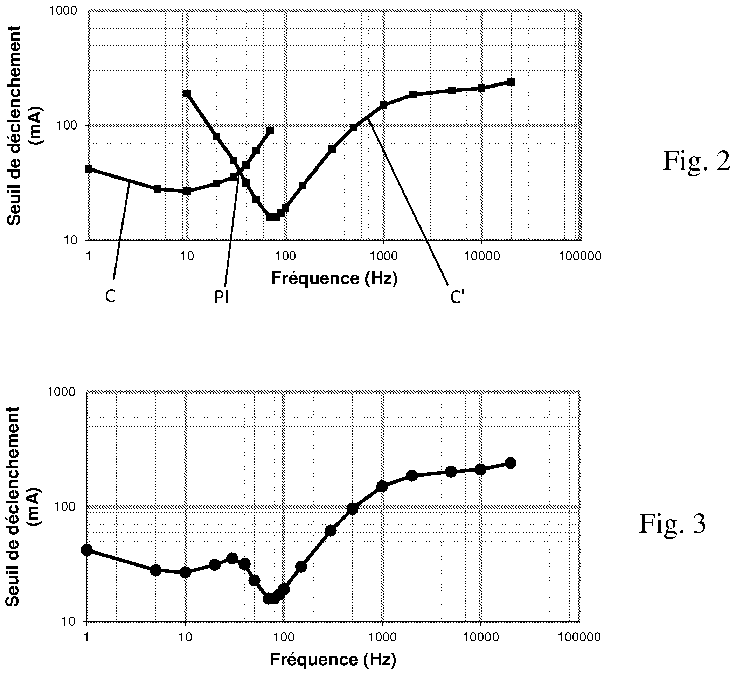

Il ressort des figures 2 et 3 que la zone de chevauchement Z des domaines fréquentiels de fonctionnement opérationnel des deux modules 3 et 3' est subdivisée en deux zones fréquentielles complémentaires Z' et Z" adjacentes, dans chacune desquelles l'un des deux modules 3, 3' présente respectivement une sensibilité et/ou une réactivité prépondérante, les sensibilités et/ou réactivités desdits modules 3, 3' étant réglées de telle manière que la valeur de la fréquence de passage d'une zone de prépondérance à l'autre est au plus égale à la valeur de la fréquence du réseau surveillé, préférentiellement inférieure à cette dernière.

Selon une caractéristique de l'invention, les courbes respectives C et C' de variation de la sensibilité en courant des deux modules 3 et 3' en fonction de la fréquence présente un point commun d'intersection PI, la valeur de la fréquence de ce point PI étant préférentiellement inférieure à la valeur de la fréquence du réseau ou du secteur, et au plus égale à cette dernière à la fréquence du réseau surveillé.

Pour une fréquence de réseau de 50 Hz par exemple, la fréquence associée au point PI peut être comprise entre 20 Hz et 50 Hz environ, préférentiellement entre 25 et 30 Hz.

Ainsi, chacun des deux modules 3 et 3' prendra sélectivement le dessus pour assurer la protection, et donc déclencher, le cas échéant, le moyen 5.

Comme le montre la figure 1, et en accord avec des caractéristiques additionnelles de l'invention, on peut noter que :
- le premier module 3 comprend avantageusement, outre des circuits d'excitation 12, de traitement du signal de défaut 4 et de prise de décision et de commande 13 de l'actionneur, du relais ou analogue 5, également des circuits de conversion AC/DC 14 et de filtrage 15, et/ou,
- le second module 3' comprend avantageusement, outre des circuits 4' de traitement du signal de défaut et de protection, et des circuits 16 de prise de décision et de commande de l'actionneur, du relais ou analogue 5, également un circuit 17 réalisant une fonction coupe-feu et un moyen 18 de stockage d'énergie électrique.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention définie par les revendications associées.

## Revendications

1. Dispositif de protection différentielle de type B ou B+ permettant la détection de courant de fuite ou de défaut dans une installation électrique alimentée par au moins deux conducteurs de phase d'un réseau ou par au moins un conducteur de phase d'un réseau et par un conducteur de neutre dudit réseau,
ledit dispositif (1) comprenant deux modules de détection et de commande distincts (3 et 3') comportant chacun au moins un étage de traitement de signaux (4, 4') apte et destiné, d'une part, à exploiter un signal de défaut généré par l'apparition d'un défaut différentiel au niveau dudit réseau et, d'autre part, à commander un actionneur électromagnétique, relais ou moyen de coupure ou d'ouverture (5) du dispositif (1) lorsque ledit signal de défaut dépasse une valeur de seuil prédéfinie dépendant de la fréquence, chacun desdits modules de détection et de commande (3, 3') étant fonctionnellement actif ou opérationnel sur une plage de fréquences déterminée qui lui est propre,
les deux modules (3 et 3') étant indépendants entre eux et arrangés de manière à constituer deux voies de détection, parallèles et mutuellement indépendantes, commandant le même actionneur, relais ou moyen de coupure (5),
en ce que le second (3') des deux modules (3, 3') étant autonome en termes d'alimentation, et en particulier non dépendant de la tension du réseau ou du secteur,
et chaque module (3, 3') étant relié à un moyen propre et spécifique (6, 6') de délivrance d'un signal de défaut,
dispositif (1) **caractérisé :**
**en ce qu'**un premier (3) des deux modules (3, 3') est un module de détection et de commande qui est fonctionnellement actif ou opérationnel pour des fréquences du signal de défaut de 0Hz à quelques dizaines de Hz, ce premier module (3) étant alimenté par le réseau,
**en ce que** le second (3') des deux modules (3, 3') est un module de détection et de commande qui est fonctionnellement actif ou opérationnel pour des fréquences du signal de défaut de quelques dizaines de Hz à au moins 1 kHz, en ce que les domaines fréquentiels de fonctionnement opérationnel des deux modules (3 et 3') précités étant partiellement chevauchants, et
**en ce que** les courbes (C et C)' de variation de la sensibilité en courant en fonction de la fréquence, des deux modules (3 et 3') respectivement, présentent un point commun d'intersection (PI), la valeur de la fréquence de ce point (PI) étant au plus égale à la valeur de la fréquence du réseau surveillé ou du secteur.

2. Dispositif selon la revendication 1, **caractérisé en ce que** les deux modules (3 et 3') présentent chacun un fonctionnement prépondérant par rapport à l'autre module (3', 3) sur des parties mutuellement complémentaires du domaine fréquentiel total des courants de défaut couvert par ledit dispositif (1).

3. Dispositif selon la revendication 1 ou 2, **caractérisé en ce que** le premier module (3) de détection et de commande, dépendant de la tension du réseau, est un module de protection différentielle sensible et réagissant aux courants de défaut continus lissés, à basse fréquence et/ou doté d'un décalage DC important.

4. Dispositif selon l'une quelconque des revendications 1 à 3, **caractérisé en ce que** le second module (3') de détection et de commande est un module de protection différentielle du type F, intégrant éventuellement une fonction du type coupe-feu, le fonctionnement dudit second module (3'), inclusivement la réalisation de la fonction précitée, étant indépendants de la tension du réseau ou du secteur.

5. Dispositif selon l'une quelconque des revendications 1 à 4, **caractérisé en ce que** chacun des moyens propres (6 et 6') de délivrance d'un signal de défaut consiste en un tore (7, 7') en matériau ferromagnétique comportant, d'une part, un enroulement primaire formé par l'un des conducteurs (2, 2') du réseau surveillé ou par un enroulement d'excitation (10), selon le moyen (6, 6') considéré et, d'autre part, au moins un enroulement secondaire (8, 9) délivrant un signal de défaut au module de détection et de commande (3 ou 3') respectivement associé, ce sous la forme d'un signal induit au niveau du secondaire lors de l'apparition d'un défaut différentiel au niveau du primaire correspondant.

6. Dispositif selon l'une quelconque des revendications 1 à 5, **caractérisé en ce que** les deux modules de détection et de commande (3 et 3') sont reliés, à leur sortie, par l'intermédiaire d'un circuit OU (11) à l'unique actionneur, relais ou moyen de coupure ou d'ouverture (5) du dispositif (1).

7. Dispositif selon l'une quelconque des revendications 1 à 6, **caractérisé en ce que** la zone de chevauchement (Z) des domaines fréquentiels de fonctionnement opérationnel des deux modules (3 et 3') est subdivisée en deux zones fréquentielles complémentaires (Z' et Z") adjacentes, dans chacune desquelles l'un des deux modules (3, 3') présente respectivement une sensibilité et/ou une réactivité prépondérante, les sensibilités et/ou réactivités desdits modules (3, 3') étant réglées de telle manière que la valeur de la fréquence de passage d'une zone de prépondérance à l'autre est au plus égale à la valeur de la fréquence du réseau surveillé, préférentiellement inférieure à cette dernière.

8. Dispositif selon l'une quelconque des revendications 1 à 7, **caractérisé en ce que** le premier module (3) comprend, outre des circuits d'excitation (12), de traitement du signal de défaut (4) et de prise de décision et de commande (13) de l'actionneur, du relais ou moyen de coupure (5), également des circuits de conversion AC/DC (14) et de filtrage (15).

9. Dispositif selon l'une quelconque des revendications 1 à 8, **caractérisé en ce que** le second module (3') comprend, outre des circuits (4') de traitement du signal de défaut et de protection, et des circuits (16) de prise de décision et de commande de l'actionneur, du relais ou moyen de coupure (5), également un circuit (17) réalisant une fonction coupe-feu et un moyen (18) de stockage d'énergie électrique.

## Patentansprüche

1. Differentialschutzvorrichtung vom Typ B oder B+, die Detektion von Leck- oder Fehlerströmen in einer Elektroinstallation erlaubend, die durch mindestens zwei Phasenleiter eines Netzes oder durch mindestens einen Phasenleiter eines Netzes und durch einen Neutralleiter des genannten Netzes versorgt wird, wobei die genannte Vorrichtung (1) zwei verschiedene Detektions- und Schaltmodule (3 und 3') aufweist, die jeweils mindestens eine Signalverarbeitungsstufe (4, 4') aufweist, die dazu geeignet und bestimmt ist, einerseits ein Fehlersignal auszuwerten, das durch Auftreten eines Differenzfehlers im genannten Netz erzeugt wird, und andererseits ein/en elektromagnetisch/en/es Schalter, Relais oder Unterbrechungs- oder Öffnungsorgan (5) der Vorrichtung (1) zu betätigen, wenn das genannte Fehlersignal einen festgelegten Schwellenwert in Abhängigkeit von der Frequenz überschreitet, wobei jedes der genannten Detektions- und Schaltmodule (3, 3') in einem bestimmten, ihm eigenen Frequenzbereich funktionell aktiv ist oder arbeitet,
wobei die beiden Module (3, 3') voneinander unabhängig und derart eingerichtet sind, dass sie zwei parallele und voneinander unabhängige Detektionswege darstellen, die denselben/dasselbe Schalter, Relais oder Trennorgan (5) ansteuern,
wobei das zweite (3') der beiden Module (3, 3') hinsichtlich der Stromversorgung unabhängig ist und insbesondere unabhängig von der Spannung des Netzes oder des Sektors,
und jedes Modul (3, 3') an ein eigenes und spezifisches Organ (6, 6') zur Ausgabe eines Fehlersignals angeschlossen ist, Vorrichtung (1), **dadurch gekennzeichnet,**
**dass** ein erstes (3) der beiden Module (3, 3') ein Detektions- und Schaltmodul ist, das bei Frequenzen des Fehlersignals von 0 Hz bis zu mehreren zehn Hz funktionell aktiv ist oder arbeitet, wobei dieses erste Modul (3) durch das Netz versorgt wird,
**dass** das zweite (3') der beiden Module (3, 3') ein Detektions- und Schaltmodul ist, das bei Frequenzen des Fehlersignals von mehreren zehn Hz bis zu mindestens 1 kHz funktionell aktiv ist oder arbeitet, dass die Arbeitsfrequenzbereiche der beiden genannten Module (3 und 3') sich teilweise überlappen, und dass die Kurven (C und C') der Änderung der Stromstärkensensibilität in Abhängigkeit von der Frequenz der beiden Module (3 bzw. 3') einen gemeinsamen Schnittpunkt (PI) aufweisen, wobei der Frequenzwert dieses Punktes (PI) höchstens gleich dem Wert der Frequenz des überwachten Netzes oder des Sektors ist.

2. Vorrichtung nach Patentanspruch 1, **dadurch gekennzeichnet, dass** die Arbeit jedes der beiden Module (3 und 3') in den zueinander komplementären Teilen des Gesamtfrequenzbereiches der Fehlerströme, den die Vorrichtung (1) abdeckt, gegenüber dem anderen Modul (3, 3') vorrangig ist.

3. Vorrichtung nach Patentanspruch 1 oder 2, **dadurch gekennzeichnet, dass** das erste Detektions- und Schaltmodul (3), das von der Netzspannung abhängig ist, ein Differentialschutzmodul ist, das auf glatte und/oder niederfrequente Fehlergleichströme und/oder solche mit einem bedeutenden Gleichspannungsversatz empfindlich ist und anspricht.

4. Vorrichtung nach irgendeinem der Patentansprüche 1 bis 3, **dadurch gekennzeichnet, dass** das zweite Detektions- und Schaltmodul (3') ein Differentialschutzmodul vom Typ F ist, das eventuell über eine Brandschutzfunktion verfügt, wobei die Arbeit des genannten zweiten Moduls (3') einschließlich der Ausführung der genannten Funktion von der Spannung des Netzes oder des Sektors unabhängig ist.

5. Vorrichtung nach irgendeinem der Patentansprüche 1 bis 4, **dadurch gekennzeichnet, dass** jedes der eigenen Organe (6 und 6') zur Ausgabe eines Fehlersignals in einem Torus (7, 7') aus ferromagnetischem Werkstoff besteht, der einerseits eine Primärwicklung trägt, die je nach dem betrachteten Organ (6, 6') von einem der Leiter (2, 2') des überwachten Netzes oder von einer Erregungswicklung (10) gebildet wird, und andererseits mindestens eine Sekundärwicklung (8, 9), die an das jeweils zugehörige Detektions- und Schaltmodul (3 oder 3') ein Fehlersignal ausgibt, und zwar in Form eines bei Auftreten eines Differenzfehlers in der entsprechenden Primärwicklung in der Sekundärwicklung induzierten Signals.

6. Vorrichtung nach irgendeinem der Patentansprüche 1 bis 5, **dadurch gekennzeichnet, dass** die beiden Detektions- und Schaltmodule (3 und 3') an ihrem Ausgang über ein ODER-Glied (11) an den/das einzige/n Schalter, Relais oder Trenn- oder Öffnungsorgan (5) der Vorrichtung (1) angeschlossen sind.

7. Vorrichtung nach irgendeinem der Patentansprüche 1 bis 6, **dadurch gekennzeichnet, dass** der Überlappungsbereich (Z) der Arbeitsfrequenzbereiche der beiden genannten Module (3 und 3') in zwei zueinander komplementäre, benachbarte Frequenzbereiche (Z' und Z") unterteilt ist, in denen jeweils eines der der beiden Module (3 bzw. 3') eine vorwiegende Sensibilität oder Reaktivität aufweist, wobei die Sensibilität und/oder Reaktivität der genannten Module (3, 3') derart eingestellt sind, dass der Frequenzwert des Überganges von einer Vorrangszone zur anderen höchstens gleich dem Frequenzwert des überwachten Netzes ist, vorzugsweise niedriger als dieser.

8. Vorrichtung nach irgendeinem der Patentansprüche 1 bis 7, **dadurch gekennzeichnet, dass** das erste Modul (3) außer Erregungs- (12), Fehlersignalverarbeitungs- (4) und Entscheidungs- und Betätigungskreis (13) des Schalters, Relais oder Trennorgans (5) auch Gleichspannungs-/Wechselspannungswandler- (14) und Filterkreise (15) umfasst.

9. Vorrichtung nach irgendeinem der Patentansprüche 1 bis 8, **dadurch gekennzeichnet, dass** das zweite Modul (3') außer Fehlersignalverarbeitungs- und Schutz- (4') und Entscheidungs- und Betätigungskreisen (16) des Schalters, Relais oder Trennorgans (5) auch einen Schaltkreis (17) zur Ausführung einer Brandschutzfunktion und ein Mittel (18) zur Speicherung elektrischer Energie umfasst.

## Claims

1. A type B or B+ differential protection device allowing the detection of leakage or fault current in an electrical installation supplied by a least two phase conductors of a network or by at least one phase conductor of a network and by one neutral conductor of said network,
said device (1) including two distinct detection and control modules (3 and 3') each comprising at least one signal processing stage (4, 4') able and intended, on the one hand, to exploit a fault signal generated by the appearance of a differential fault at said network and, on the other hand, to control an electromagnetic actuator, relay or means for breaking or opening (5) the device (1) when said fault signal exceeds a frequency-dependent predefined threshold value, each of said detection and control modules (3, 3') being functionally active or operational over its own specific frequency range,
the two modules (3 and 3') being independent of each other and arranged so as to constitute two parallel and mutually independent detection channels, controlling the same actuator, relay or breaking means (5),
in that the second module (3') of the two modules (3, 3') being autonomous in terms of power supply, and in particular not depending on the voltage of the network or of the sector,
and each module (3, 3') being connected to its own specific means (6, 6') for delivering a fault signal,
the device (1) **characterized:**
**in that** a first (3) of the two modules (3, 3') is a detection and control module which is functionally active or operational for frequencies of the fault signal from 0Hz to a few tens of Hz, this first module (3) being supplied by the network,
**in that** the second (3') of the two modules (3, 3') is a detection and control module which is functionally active or operational for frequencies of the fault signal of a few tens of Hz to at least 1 kHz, in that the frequency domains of operational functioning of the two modules (3 and 3') mentioned above being partially overlapping, and
**in that** the curves (C and C') of variation of the current sensitivity as a function of the frequency of the two modules (3 and 3') respectively, present a common point of intersection (PI), the value of the frequency of this point (PI) being at most equal to the value of the frequency of the monitored network or of the sector.

2. The device according to Claim 1, **characterized in that** the two modules (3 and 3') each have a preponderant operation with respect to the other module (3', 3) on mutually complementary portions of the total frequency domain of the fault currents covered by said device (1).

3. The device according to Claims 1 or 2, **characterized in that** the first detection and control module (3), depending on the voltage of the network, is a differential protection module sensitive and reacting to the smoothed direct fault currents, at low frequency and/or with a large DC offset.

4. The device according to any one of Claims 1 to 3, **characterized in that** the second detection and control module (3') is a type F differential protection module, optionally incorporating a function of the fire-break type, the functioning of said second module (3'), including the realisation of the above-mentioned function, being independent of the voltage of the network or of the sector.

5. The device according to any one of Claims 1 to 4, **characterized in that** each of its own means (6 and 6') for issuing a fault signal consists of a toroid (7, 7') of ferromagnetic material comprising, on the one hand, a primary winding formed by one of the conductors (2, 2') of the monitored network or by an excitation winding (10), according to the means (6, 6') concerned and, on the other hand, at least one secondary winding (8, 9) delivering a fault signal to the respectively associated detection and control module (3 or 3'), this being in the form of a signal induced at the level of the secondary during the occurrence of a differential fault at the level of the corresponding primary.

6. The device according to any one of Claims 1 to 5, **characterized in that** the two detection and control modules (3 and 3') are connected, at their output, via an OR gate (11) to the single actuator, relay or breaking or opening means (5) of the device (1).

7. The device according to any one of Claims 1 to 6, **characterized in that** the overlapping zone (Z) of the frequency domains of operational functioning of the two modules (3 and 3') is subdivided into two adjacent complementary frequency zones (Z' and Z"), in each of which one of the two modules (3, 3') has respectively a preponderant sensitivity and/or a reactivity, the sensitivities and/or reactivities of said modules (3, 3') being adjusted in such a way that the value of the frequency of passage from one preponderance zone to the other is at most equal to the value of the frequency of the monitored network, preferentially lower than the latter.

8. The device according to any one of Claims 1 to 7, **characterized in that** the first module (3) includes, in addition to the circuits for excitation (12), fault signal processing (4) and decision-making and control (13) of the actuator, the relay or breaking means (5), also circuits for AC/DC conversion (14) and filtering (15).

9. The device according to any one of Claims 1 to 8, **characterized in that** the second module (3') includes, in addition to the circuits (4') for processing the fault and protection signal, and the circuits (16) for decision-making and control of the actuator, the relay or breaking means (5), also a circuit (17) performing a fire-break function and a means (18) for storing electrical energy.
